(19) Europäisches Patentamt / European Patent Office / Office européen des brevets

(11) **EP 2 334 719 B1**

(12) **EUROPEAN PATENT SPECIFICATION**

(45) Date of publication and mention
of the grant of the patent:
**26.04.2017 Bulletin 2017/17**

(51) Int Cl.:
*C08J 9/00* (2006.01)    *C08J 9/16* (2006.01)
*C08L 25/06* (2006.01)    *C08L 67/04* (2006.01)

(21) Application number: **09740202.8**

(22) Date of filing: **05.10.2009**

(86) International application number:
**PCT/NL2009/050595**

(87) International publication number:
**WO 2010/041936 (15.04.2010 Gazette 2010/15)**

(54) **PARTICULATE, EXPANDABLE POLYMER, METHOD FOR PRODUCING PARTICULATE EXPANDABLE POLYMER, AS WELL AS A SPECIAL USE OF THE OBTAINED FOAM MATERIAL**

TEILCHENFÖRMIGES, EXPANDIERBARES POLYMER, VERFAHREN ZUR HERSTELLUNG VON TEILCHENFÖRMIGEM EXPANDIERBAREM POLYMER SOWIE SPEZIELLE VERWENDUNG DES ERHALTENEN SCHAUMSTOFFMATERIALS

POLYMÈRE PARTICULAIRE EXPANSIBLE, PROCÉDÉ DE PRODUCTION D'UN POLYMÈRE PARTICULAIRE EXPANSIBLE, ET UTILISATION SPÉCIALE DU MATÉRIAU DE MOUSSE OBTENU

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **09.10.2008   NL 1036039**

(43) Date of publication of application:
**22.06.2011   Bulletin 2011/25**

(73) Proprietor: **SYNBRA TECHNOLOGY B.V.**
**4871 NM  Etten-Leur (NL)**

(72) Inventors:
• **NOORDEGRAAF, Jan**
**NL-6602 ZX Wijchen (NL)**
• **KUIJSTERMANS, Franciscus Petrus Antonius**
**NL-4714RK Sprundel (NL)**

• **DE JONG, Josephus Petrus Maria**
**NL-4812 LB Breda (NL)**

(74) Representative: **Algemeen Octrooi- en Merkenbureau B.V.**
**P.O. Box 645**
**5600 AP Eindhoven (NL)**

(56) References cited:
**EP-A1- 1 486 530     WO-A2-2007/149418**
**US-A- 5 182 163**

• **DATABASE WPI Week 200525 Thomson Scientific, London, GB; AN 2005-242150 XP002531479 & WO 2005/023918 A1 (IDEMITSU KOSAN CO LTD) 17 March 2005 (2005-03-17)**

**Description**

The present invention relates to a particulate, expandable polymer which can be processed to form a foam having a fine cell structure and a low density, said polymer containing active carbon having a D10 of at most 12 micrometer as a material for increasing the thermal insulation value. The designation D10 as used herein refers to the 10th percentile, indicating the particle size that 10% of the population does not exceed. This will be explained in detail hereinafter. The present invention further relates to a method for producing particulate, expandable polymer, as well as to a foam material based on the present polymer.

The present inventor's Dutch patent NL 1023638 relates to a particulate, expandable polystyrene (EPS) provided with active carbon.

In more detail NL 1 023 638 (corresponding to EP 1 486 530) relates to a particulate, expandable polystyrene (EPS) which can be processed into a foam having a fine cell structure and a low density and with, wherein active carbon is present in the polystyrene particles as a thermal insulation value-increasing material. The active carbon has a particle size ≤ 12 micrometer and the amount of active carbon is 1-15 wt.%, based on the amount of styrene polymer.

A method for increasing the thermal insulation value of EPS is also known from International patent application WO 00/43442, wherein styrene polymer is melted in an extruder and is mixed at least with a blowing agent and aluminium particles substantially having a laminar shape of a dimension ranging from 1 to 15 mm, followed by joint extrusion. The amount of aluminium particles that is used is at most 6 wt.%. Following this, the extrudate is cooled and reduced to particles. Such polymers contain aluminium particles so as to enhance the thermal insulation properties thereof, with the aluminium particles being homogeneously distributed and incorporated as a material that reflects infrared radiation.

The present invention relates to polymers that can be used for obtaining foamed moulded products. The present invention in particular relates to the use of polystyrene, polylactic acid and a combination thereof.

The starting material that is used for producing expandable polystyrene (EPS) can be obtained not only via the extrusion process, as known from the aforesaid International patent application WO 00/43442, but also via suspension polymerisation. The EPS thus obtained, in the form of granulate or granules formed by means of an extrusion process, is generally used as a starting material in the packaging industry and the construction industry. Where the term "granules" is used in the description below, this can also be read as "granulate" and vice versa.

Polylactic acid (PLA) is a generic term for polymers based on lactic acid monomers, in which the structure of polylactic acid can vary from fully amorphous to semi-crystalline or crystalline, depending on the composition Polylactic acid can be produced from milk products or from maize, for example. Lactic acid is the monomer of which polylactic acid is built up, and this monomer occurs in two stereo isomers, viz. L-lactic acid and D-lactic acid. Polylactic acid thus contains a certain amount of L-lactic acid monomers and a certain amount of D-lactic acid monomers. The ratio between the L- and D-lactic acid monomers in polylactic acid determines the properties thereof. The terms D-value or D-content (percentage of D-lactic acid monomers) are also used. Currently commercially available polylactic acid comprises a ratio L:D of 100:0 to 75:25; in other words, a D-content of 0 to 25%, or between 0 and 0.25.

The method for the further processing of EPS granules comprises a so-called pre-foaming treatment, in which an specific amount of steam is passed through a layer of polymer granules in an expansion vessel, causing the blowing agent that is present in the polymer granules (usually pentane), to evaporate, resulting in foaming of the granules. After a storage period of about 4-48 hours, also referred to as "setting", the granule thus pre-foamed is introduced into a substantially fitting mould, in which the granules are further caused to expand under the influence of steam. The desired moulded product is obtained in that the pre-foamed granules further expand under the influence of steam and also fuse into one moulded product.

An example of the further processing of PLA granulate is the following. After impregnation with for example 6-8 % $CO_2$, PLA granulate is foamed at a pressure of for example 20 bar. The PLA is then impregnated anew as a foam with, for example, 6 % $CO_2$ and formed in a mould, using a steam pressure of 0.2 to 0.5 bar. This results in the moulded product being obtained in a similar manner as described above with regard to EPS granules.

The mould used in the above methods is provided with small apertures, so that the remaining blowing agent and possibly steam can escape during the expansion process whilst the granules fuse together to the desired shape. The dimension and shape of this mould is in principle not bound by limitations, making it possible to obtain blocks for the construction industry as well as meat dishes or fish boxes, for example.

In the production of EPS-granules via the above-described polymerisation process, a particle size having a so-called Gauss-distribution, generally over a range from 0.2 mm to 2.5 mm, is obtained. In practice it has been found that the fraction having a particle size < 0.3 mm is in fact unsuitable for regular packaging material, and that particles having a particle size < 0.6 mm are not suitable for construction purposes. Although it is possible within certain bounds to influence the particle size during the suspension polymerisation, in principle there will always be a certain amount of residual fractions, viz. small particles having a particle size < 0.3 mm and large particles having a particle size > 2.4 mm, which large particles are also undesirable for the aforesaid use.

Since such residual fractions still contain valuable materials, a method for recycling said materials in an extruder was already developed previously by the present inventor. The starting material, viz. residual fraction having a small or a large particle size, is fed to the extruder, with the blowing agent fully exiting the starting material during extrusion, being discharged via a vent port connected to the extruder and combusted in an integrated post-combustion process, during which steam may be generated. The granulate, from which the blowing agent has thus been removed, is discharged from the extruder via a heated extrusion head and chopped into small particles. A problem that occurs in such a recycling process is that the EPS granules comprise fire retardants in addition to blowing agent, which fire retardants start to decompose at the temperatures that prevail in the extruder, resulting in halogen radicals, as a result of which the chain length of polystyrene is undesirably decreased. Moreover, as a result of the formation of halogen gas, this may furthermore lead to corrosion of the extruder. The residual fractions are thus not recycled as 100% material. i.e. the residual fractions are mixed with new material.

PLA-granules are formed by so-called head chopping from an extrusion device. To that end, solid PLA is charged to an extrusion device and melted. Subsequently, the melted PLA is forced through a die, for example a so-called underwater granulator, and the PLA-granules are formed by so-called head chopping. According to another possibility, liquid PLA from an in-line polymerisation process, which thus does not need to be melted first, is delivered directly to the extrusion device. Preferably, a twin-screw extruder is used as the extrusion device. In an extrusion device, the polylactic acid or the mixture of polylactic acid and possibly one or more other biodegradable polymers with possibly one or more of chain extender, nucleating agent and lubricant can be processed to form particles. Such particulate polylactic acid is also described in the present inventors' PCT/NL2008/000109.

Following the extrusion of the polylactic acid, a blowing agent is added by impregnation of the PLA-granules so as to obtain expandable PLA (EPLA). Examples of blowing agents that may be used include $CO_2$, MTBE, nitrogen, air, (iso-)pentane, propane, butane and the like, or one or more combinations thereof. According to the first method, the polylactic acid is formed into particles, for example by means of an extrusion process, which particles are subsequently rendered expandable by impregnation with a blowing agent. According to the second method, the polylactic acid is mixed with a blowing agent, which is subsequently directly formed into expandable particles, for example by means of an extrusion process.

A first aspect of the present invention is to provide a particulate, expandable polymer, wherein polymer foam is obtained after further processing, which foam has a sufficiently low heat conduction coefficient that is desired in practice, thus making it possible to use the foam for realising the intended thermal insulation properties.

A further aspect of the present invention is to provide a particulate, expandable polystyrene (EPS), wherein EPS foam is obtained after further processing, which foam has a sufficiently low thermal conduction coefficient that is desired in practice, thus making it possible to use the foam for realising the intended thermal insulation properties.

Another aspect of the present invention is to provide a particulate, expandable polylactic acid (EPLA), wherein EPLA foam is obtained after further processing, which foam has a sufficiently low thermal conduction coefficient that is desired in practice, thus making it possible to use the foam for realising the intended thermal insulation properties.

Another aspect of the present invention is to provide a particulate, expandable mixture of polystyrene and polylactic acid (EPS-EPLA), wherein EPS-EPLA foam is obtained after further processing, which foam has a sufficiently low heat conduction coefficient that is desired in practice, making it possible to use the foam for realising the intended thermal insulation properties.

Another aspect of the present invention is to provide a method for producing expandable polymer, wherein polymer can be converted in the presence of one or more additional components into a material which, after foaming and moulding, has a higher thermal insulation value.

Another aspect of the present invention is to provide of a method for producing expandable polymer, wherein the polymer granulate has a density of about 1000 kg/m$^3$ and, after foaming or expanding, a density of less than 100 kg/m$^3$.

Yet another aspect of the present invention is to provide a particulate expandable polymer foam which, in its final form after foaming and moulding, also meets the fire resistance requirements according to the B2-test, viz. DIN 4102, part 2.

The present-inventors have carried out extensive research into the properties of various expandable polymer particles and various kinds of active carbon. After said extensive research into the best combination of good structural and good thermal insulation properties, the present inventors surprisingly came to the discovery that the thermal insulation value can be further increased in relation to that which is described in NL 1023638 through precise control of the particle size distribution of the active carbon used for increasing the thermal insulation value. So far such a precise control of the particle size distribution has not been described yet for expandable polymers.

The particle size distribution in fine powders in general is of major importance. So far, however, the importance of the particle size distribution in the use according to the present invention was not known and has been determined by the inventors. Examples where the particle size distribution is important are the control of powder flow, surface area and consequently absorption of, for example, oil war gas, as well as activity in the case of finely distributed catalysts and the like, and of course in case of possible dangers.

Because the importance of particle size distribution in fine powders was in general already recognised, various instruments were developed specifically for measuring said particle size distribution in fine powders, for example-by Malvern Instruments with the products Mastersizer and Lazersizer. Such a measurement can also be carried out with a Coulter counter from Coulter Electronic Ltd. The use of such instruments in determining the particle size distribution is well known to those skilled in the art (see for example WO 1994/029383 and WO 96/11962). Using the aforesaid instruments, the size of every one of a large number of particles is measured separately. Subsequently, the population of each size is plotted against the size in a diagram so as to obtain a so-called distribution curve. On the other hand, the data may also be plotted in a diagram as a so-called cumulative distribution curve. With such a cumulative distribution curve, the fraction of the sample having a size smaller than a predetermined size is plotted against said size. From such a cumulative distribution curve, the D10 (the size that 10% of the population does not exceed), the D50 (the size that half of the population does not exceed) and the D90 (the size that 90% of the population does not exceed) can be derived in a simple manner, and said three values (D10, D50 and D90) are frequently used by persons skilled in this field for characterising the particle size distribution in powder. In particular the ratio (D90=D10)/D50 (also called particle size distribution) provides a good indication as regards the distribution of the sizes present in the powder. Said particle size distribution provides additional information which is highly valuable in characterising the powder in comparison with only the median (viz. the D50).

The present invention relates to a particulate, expandable polymer as described in the opening paragraph, wherein the particle size distribution of the active carbon is according to the following formula:

$$particlesizedistribution = \frac{(D90 - D10)}{D50} \leq 2,0$$

wherein D10, D50 and D90 are the 10th, 50th and 90th percentile, respectively, indicating in a curve of the cumulative particle size the particle sizes when the accumulated amounts of the particles are 10%, 50%, and 90%, respectively.

In other words, the 10th percentile is the particle size where 10% of the particles are smaller than or equal to said value, and 90% of the particles are larger, therefore.

In other words, the 50th percentile is the particle size where 50% of the particles are smaller than or equal to said value, and 50% of the particles are larger, therefore.

In other words, the 90th percentile is the particle size where 90% of the particles are smaller than or equal to said value, and 10% of the particles are larger, therefore.

Without being bound to a particular theory, the present inventors think that as a result of the controlled and finer particle size distribution of the active carbon, more active carbon particles are available in the wall of the polystyrene-cells for affecting adsorption or reflection of incident radiant heat and thus increasing the thermal insulation value.

One or more aspects of the present invention are accomplished by using active carbon having a specific particle size distribution as the material that increases the thermal insulation value.

The desired particle size distribution as required in the present invention, viz. a particle size smaller than or equal to 2.0, is not easy to obtain. Such a narrow particle size distribution requires the special processing and grinding of the starting material of the active carbon as commercially available. The powders as for example used in NL 1023638 are types which are commercially available, and said types contain significant amounts of larger particles. At least 10% of the particles are larger than 40 micrometer. Such powders would thus not comply with a particle size distribution as narrow as that of the present invention. The powders used in the present invention contain a much smaller amount of coarse particles, since said coarse particles have been removed through elimination, for example screening. The removal of said coarse particles and thus the reduction of the particle size distribution is an essential feature of the present invention and important to the improved efficiency of the active carbon in reducing heat transmission by the foamed materials according to the present invention.

The polymer granulate obtained according to the present invention has a density in the 850-1300 kg/m$^3$ range, wherein, after expansion, a material having a density in the 9-100 kg/m$^3$ range, in-particular in the 15-30 kg/m$^3$ range, is obtained.

To obtain a particulate, expandable polymer comprising the means for increasing the thermal insulation value thereof, it is in particular desirable if the active carbon has a D10 of at most 12 micrometer, in particular a D10 of at most 8 micrometer, in particular a D10 of at most 5 micrometer, more in particular 3 micrometer or even 2 micrometer.

In a special embodiment it is desirable if the amount of active carbon amounts to 1-15 wt.%, based on the polymer, the amount of active carbon preferably amounts to 2-10 wt.%, more in particular the amount of active carbon amounts to 3-8 wt.%, based on the polymer. If the amount of active carbon is less than 1 wt.%, an insufficient increase of the thermal insulation value is obtained. In those cases in which an amount higher than 15 wt.% is used, no additional thermal insulation effect is observed, but the structural properties decrease undesirably.

In a preferred embodiment of the present invention, the polymer is polystyrene. This is understood to mean that at least 80 wt.%, preferably at least 90 wt.%, in particular at least 99 wt.% and more in particular 100 wt.%, of the particulate polymer is polystyrene.

In a preferred embodiment of the present invention, the polymer is polylactic acid. This is understood to mean that at least 80 wt.%, preferably at least 90 wt.%, in particular at least 99 wt.% and more in particular 100 wt.% of the particulate polymer is polylactic acid.

In a preferred embodiment of the present invention, the polymer is a combination of polylactic acid and polystyrene. This is understood to mean that at least 80 wt.%, preferably at least 90 wt.%, in particular at least 99 wt.% and more in particular 100 wt.% of the particulate polymer is a combination of polylactic acid and polystyrene, in any desired ratio.

Especially preferred is an embodiment in which the particle size distribution of the active carbon is smaller than or equal to 1.8, preferably smaller than or equal to 1.6. Such a distribution leads to a more uniform distribution of the active carbon in the polymer particles.

It should be understood that in specific embodiments the additional presence of one or more other thermal insulation value-increasing agents selected from the group of graphite, aluminium powder, $Al(OH)_3$, $Mg(OH)_2$ and $Al_2O_3$, iron, zinc, copper and alloys thereof in particulate expandable polystyrene may be desirable.

Using the present method, it has been found to be possible to process polymer having a particle size < 0,3 mm in an extruder without any problems worth mentioning. In specific embodiments it is on the other hand also possible to use polymer having a particle size > 2,4 mm. It is of course also possible to process intermediate particle sizes by means of an extrusion process.

In a specific embodiment it is desirable to obtain polymer having a particle size of 0.7-1.0 mm, in particular a particle size of 1.0-2,4 mm, preferably a particle size of 1.0-1.5 mm.

To obtain expandable polystyrene (EPS) exhibiting an adequate fire retardancy, it is preferable if the polymer contains a fire retardant, in particular hexabromocyclododecane (HBCD), before the extrusion takes place.

If the product obtained after extrusion is to meet stringent fire safety requirements, it is desirable that one or more fire retardants selected from the group consisting of hexabromocyclododecane (HBCD), dicumyl peroxide and 2,3-dimethyl-2,3-diphenyl butane are separately fed to the extruder during the extrusion process, with the amount thereof ranging between 1.0 and 8 wt.%, based on the amount of EPS polymer.

In a preferred embodiment of the present invention, the polylactic acid comprises a chain extender, for example selected from the group consisting of polyepoxides and diepoxides (Joncryl 4368C from supplier BASF) di-isocyantates, oxazines and oxazolines, cyclic dianhydrides (for example PMDA), peroxides (for example Trigonox types from Akzo Nobel) and the like. Such a chain extender is added to increase the melting strength of the polylactic acid. Examples of such a chain extender include Joncryl 4368C from supplier BASF. Zinc stereate may be added as a catalyst of the chain extender.

In another embodiment of the present invention, the polylactic acid also comprises a nucleating agent or foam nucleating agent, preferably selected from the group consisting of polyolefin wax, such as polyethylene wax or polypropylene wax, for example, or talcum or nano clay. The foam quality is improved by the addition of such a nucleating agent. An example of this is Polywax P3000 from Baker Hughes Corp.

In yet another further preferred embodiment of the present invention, the polylactic acid also comprises a lubricant, for example selected from the group consisting of zinc stearate or other metal salts or stearates. Said lubricant functions as an external lubricant. If zinc stearate is selected, it can also function as a catalyst of the chain extender.

The particle size of the particulate polylactic acid preferably ranges between 0.5 mm and 5 mm. A particle size of less than 0.5 mm is very difficult to obtain without losing the desired properties, and a particle size of more than 5 mm results in less favourable foam properties on account of the reduced ratio between surface area and volume of the particle. The particle size in particular ranges between 0.5 mm and 1.5 mm because of the optimum foam properties.

The present invention further relates to a method for producing particulate expandable polymer, wherein polymer is fed to an extruder, mixed with at least a blowing agent and active carbon having a D10 of at most 12 micrometer and subsequently extruded, cooled and further reduced to particles, wherein particle size distribution of the active carbon is according to the following formula:

$$particle\,size\,distribution = \frac{(D90 - D10)}{D50} \leq 2,5$$

wherein D10, D50 and D90 are the 10th, 50th and 90th percentile, respectively, indicating in a curve of the cumulative particle size the particle sizes when the accumulated amounts of the particles are 10%, 50%, and 90%, respectively.

The present invention also relates to a method for producing particulate expandable polymer, wherein polymer is fed to an extruder and mixed with active carbon having a D10 of at most 12 micrometer, and is then extruded, cooled and further reduced to particles and subsequently subjected to an impregnation treatment with blowing agent so as to obtain a material which is cooled and which contains blowing agent, wherein the particle size distribution of the active carbon is according to the following formula:

$$particle\ size\ distribution = \frac{(D90 - D10)}{D50} \leq 2,5$$

wherein D10, D50 and D90 are the 10th, 50th and 90th percentile, respectively, indicating in a curve of the cumulative particle size the particle sizes when the accumulated amounts of the particles are 10%, 50%, and 90%, respectively.

The embodiments of the particulate, expandable polymer mentioned in the description and the claims also apply to the methods for producing the same, and vice versa.

There are no limitations as regards the manner of adding the active carbon. It can for example be done by adding the same as a powder or carried on a carrier, for example on polystyrene or a copolymer of polystyrene and other polymers, for example acrylate polymer. The advantage of active carbon carried on a carrier is that it is easier to process, since it does not exhibit the dust formation that active carbon powder as such exhibits.

The active carbon can be added at various moments during the process of preparing the particulate, expandable polymer. It can for example be added simultaneously with polymer granules in the feed hopper of the extruder. It can furthermore be added just before extrusion by a side feed unlit. In addition to that it can be added in the extrusion chamber itself. It may also be added in a so-called in-line polymerisation unit (as for example marketed by BASF), for example by a side feed unit.

The present invention further relates to a polymer foam material based on particulate, expandable polymer as described in the foregoing, wherein the polymer foam material is preferably used for thermal insulation purposes.

After expansion, the present foam material preferably has a density ranging between 9 and 100 $kg/m^3$, in particular 15-30 $kg/m^3$.

The invention will be explained hereinafter by means of a number of examples and comparative examples, in which connection it should be noted, however, that the present invention is by no means limited to such examples.

EXAMPLES

De present inventors subjected the active carbon as used in NL 1023638, being active carbon ground on a ball mill, to measurements regarding the particle size distribution. Furthermore, the 50th and the 90th percentile were determined, viz. the particle size where 50% and 90%, respectively, of the particles are smaller than or equal to said value. The term "particle sizes" as used in NL 1023638 relates to the D10 particle size or, in other words, the 10th percentile The details regarding the active carbon types used are shown in Table 1.

The active carbon used in the present invention has an altogether different, much narrower particle size distribution, which is shown below in Table 1.

Table 1.

| Type | 10th percentile | 50th percentile | 90th percentile | particle size distribution (D90-D10) D50 |
|---|---|---|---|---|
| Type A according to NL1023638[1] | 2 | 6 | 40 | 6.3 |
| Type B according to NL1023638[1] | 3 | 7 | 43 | 5.7 |
| Type C according to NL1023638[1] | 10 | 20 | 60 | 2.5 |
| Type 1 according to invention[2] | 2 | 5 | 10 | 1.6 |
| Type 2 according to invention[3] | 3 | 5 | 10 | 1.4 |
| Type 3 according to invention[4] | 2 | 4 | 8 | 1.5 |
| Type 4 according to invention[5] | 2 | 4 | 8 | 1.5 |

(continued)

| Type | 10th percentile | 50th percentile | 90th percentile | particle size distribution (D90-D10) D50 |
|---|---|---|---|---|
| Type 5[6] | 2 | 5 | 8 | 1.2 |

1) active carbon of Norit GL 50 ground on ball mill
2) active carbon 59% on a carrier, viz. a copolymer of polystyrene and acrylate (HCA, Apeldoorn, type 60-10-15712)
3) active carbon 59% on a carrier, viz a copolymer of polystyrene and acrylate (HCA, Apeldoorn, type 60-10-15717)
4) Active carbon (Norit, type PAC BC)
5) Active carbon (Norit, type PAC BC) 35% carried on polystyrene as the carrier (Synbra technology
B.V. polystyrene type GPPS)
6) graphite (Krofmuhl, type UF2 96/97)

The obtained polymer particles provided with active carbon were formed into a moulded product by means of a foaming process with a specific density of for example 30, 20 or 15 gram/litre, which moulded product was subjected to a test for determining the lambda value according to EN-12939. As the lambda values decrease (towards 0.0300), the differences become smaller and less easy to measure. Small deviations in the measuring results can occur with such low values, which deviations are not observed, or to a lesser extent, at higher values of around 0.0330. In addition to that, the moulded product was subjected to a combustibility test, viz. the B2-test, measured according to DIN 4102, part 2

COMPARATIVE EXAMPLES

COMPARATIVE EXAMPLE 1

Blowing agent, styrene polymer, 0.8 wt % hexabromocyclododecane (HBCD) and 0.3 wt.% dicumyl peroxide were supplied to an extruder, whilst an amount of 2.0 wt.% active carbon type C having an average particle size (D10; 10th percentile) of 10 micrometer was co-extruded so as to increase the thermal insulation value. This example corresponds to Example 1 of NL 1023638. The obtained results are summarized in Table 2 below.

COMPARATIVE EXAMPLE 2

The same operations as described in Comparative Example 1 were carried out, except that the amount of active carbon type C was increased to 5.0 wt.%. This example corresponds to Example 2 of NL 1023638.

COMPARATIVE EXAMPLE 3

The same operations as described in Comparative Example 1 were carried out, except that the amount of active carbon type C was increased to 8.0 wt.%. This example corresponds to Example 3 of NL 1023638.

COMPARATIVE EXAMPLE 4

The same operations as described in Comparative Example 1 were carried out, except that the active carbon type B was added in an amount of 2.0 wt.% and having a particle size (D10; 10th percentile) of 3 micrometer. This example corresponds to Example 7 of NL 1023638.

COMPARATIVE EXAMPLE 5

The same operations as described in Comparative Example 4 were carried out, except that the amount of active carbon type B was increased to 5.0 wt.%. This example corresponds to Example 8 of NL 1023638.

COMPARATIVE EXAMPLE 6

The same operations as described in Comparative Example 4 were carried out, except that the amount of active carbon type B was increased to 8.0 wt.%. This example corresponds to EXample 9 of NL 1023638.

COMPARATIVE EXAMPLE 7

The same operations as described in Comparative Example 4 were carried out, except that the amount of active carbon type B was increased to 10.0 wt.%. This example corresponds to Example 10 of NL 1023638.

COMPARATIVE EXAMPLE 8

The same operations as described in Comparative Example 1 were carried out, except that an amount of 2.0 wt.% active carbon type A having a particle size (D10; 10th percentile) of 2 micrometer was co-extruded. This example corresponds to Example 11 of NL 1023638

COMPARATIVE EXAMPLE 9

The same operations as described in Comparative Example 8 were carried out, except that the amount of active carbon type A was increased to 5.0 wt.%. This example corresponds to Example 12 of NL 1023638.

COMPARATIVE EXAMPLE 10

The same operations as described in Comparative Example 5 were carried out, except that the particulate, expandable polystyrene was obtained by means of an extrusion process, with the metering of blowing agent, in particular pentane, taking place via the suspension route. This example corresponds to Example 17 of NL 1023638.

COMPARATIVE EXAMPLE 11

Lactic acid polymer, type Hisun expansion grade PLA, impregnated with 5.5% blowing agent $CO_2$ was supplied to an extruder. An agent for increasing the thermal insulation value was not added.

EXAMPLES

EXAMPLE 1

The same operations as described in Comparative Example 1 were carried out, except that an amount of 3.0 Wt.% active carbon type 4 according to the invention having a particle size (D10; 10th percentile) of 2 micrometer and a particle size distribution of 1.5 was co-extruded.

EXAMPLE 2

The same operations as described in Example 1 were carried out, except that active carbon was co-extruded in an amount of 2.0 wt.%.

EXAMPLE 3

The same operations as described in Example 1 were carried out, except that active carbon type 3 having a particle size (D10; 10th percentile) of 2 micrometer and a particle size distribution of 1.5 was used in an amount of 5.0 wt.%. The active carbon was co-extruded as a powder.

EXAMPLE 4

The same operations as described in Example 3 were carried out, except that the amount of active carbon was increased to 6.0 wt.%.

EXAMPLE 5 ,

The same operations as described in Example 3 were carried out, except that the amount of active carbon was increased to 7.0 wt.%.

EXAMPLE 6

Lactic acid polymer, type Hisun expansion grade PLA, impregnated with 5.5% blowing agent $CO_2$ was added to an extruder. An amount of 3.0 wt.% active carbon type 3 having a particle size (D10, 10th percentile) of 2 micrometer and a particle size distribution of 1.5 was co-extruded as an agent for increasing the thermal insulation value.

EXAMPLE 7

The same operations as described in Example 6 were carried out, except that the active carbon was co-extruded in an amount of 4.0 wt.%.

EXAMPLE 8

The same operations as described in Example 6 were carried out, except that the active carbon was co-extruded in an amount of 9.0 wt.%.

Comparative EXAMPLE 9 - Bis

The same operations as described in Example 8 were carried out, except that active carbon type 5 having a particle size (D10; 10th percentile) of 2 micrometer and a particle size distribution of 1.2 was used in an amount of 5.0 wt.%.

EXAMPLE 10

The same operations as described in Example 6 were carried out, except that the active carbon was co-extruded in an amount of 7.0 wt.%.

EXAMPLE 11

Styrene polymer and lactic acid polymer Hisun expansion grade (in a ratio of 95:5) impregnated with 5.5 % $CO_2$ as a blowing agent were added to an extruder, whilst active carbon type 3 having a D10 of 2 micrometer was co-extruded in an amount of 5.0 wt.% as an agent for increasing the thermal insulation value.

Table 2

| Example | polymer | wt.% active carbon | type of active carbon | Lambda value W/mK, 15 g/l | Lambda value W/mK, 20 g/l | B2-test | D10 particle size (particle size distribution) |
|---|---|---|---|---|---|---|---|
| Comparative Example 1 | PS | 2 | C | n.d. | 0,0335 | n.d. | 10 (2.5) |
| Comparative Example 2 | PS | 5 | C | n.d. | 0,032 | n.d. | 10 (2.5) |
| Comparative Example 3 | PS | 8 | C | n.d. | 0,032 | Yes | 10 (2.5) |
| Comparative Example 4 | PS | 2 | B | n.d. | 0,033 | n.d. | 3 (5.7) |
| Comparative Example 5 | PS | 5 | B | 0,033 | 0,03 | n.d. | 3 (5.7) |
| Comparative Example 6 | PS | 8 | B | 0,032 | 0,03 | n.d. | 3 (5.7) |
| Comparative Example 7 | PS | 10 | B | 0,032 | 0,0295 | yes | 3 (5.7) |
| Comparative Example 8 | PS | 2 | A | n.d. | 0,033 | n.d. | 2 (6.3) |

(continued)

| Example | polymer | wt.% active carbon | type of active carbon | Lambda value W/mK, 15 g/l | Lambda value W/mK, 20 g/l | B2-test | D10 particle size (particle size distribution) |
|---|---|---|---|---|---|---|---|
| Comparative Example 9 | PS | 5 | A | 0,033 | 0,0305 | yes | 2 (6.3) |
| Comparative Example 10 | PS | 5 | A | n.d. | 0,032 | yes | 2 (6.3) |
| Comparative Example 11 | PLA | -- | -- | 0,035 | 0,033 | n.d. | -- |
| Example 1 | PS | 3 | 4 | 0,0312 | 0,0302 | yes | 2 (1.5) |
| Example 2 | PS | 2 | 4 | 0,0333 | 0,0323 | yes | 2 (1.5) |
| Example 3 | PS | 5 | 3 | 0,0318 | 0,0308 | yes | 2 (1.5) |
| Example 4 | PS | 6 | 3 | 0,0319 | 0,0309 | yes | 2 (1.5) |
| Example 5 | PS | 7 | 3 | 0,0316 | 0,0306 | yes | 2 (1.5) |
| Example 6 | PLA | 3 | 3 | 0,0324 | 0,0305 | n.d. | 2 (1.5) |
| Example 7 | PLA | 4 | 3 | 0,0305 | 0,03 | n.d. | 2 (1.5) |
| Example 8 | PLA | 5 | 3 | 0,031 | 0,03 | n.d. | 2 (1.5) |
| Comparative Example 9 - bis | PLA | 5 | 5 | 0,0305 | 0,03 | n.d. | 2 (1.2) |
| Example 10 | PLA | 7 | 3 | 0,0316 | 0,0301 | n.d. | 2 (1.5) |
| Example 11 | PS/PLA | 5 | 3 | 0,0317 | 0,0305 | n.d. | 2 (1.5) |
| n.d. = not determined | | | | | | | |

From Table 2 it appears that when active carbon having a particle size D10 of 2 micrometer was added to PS in an amount of 2.0 wt.%, the lambda value for Comparative Example 8 (particle size distribution: 6.3) was 0.0330 W/mK with 20 g/l, whilst said value was 0.0323 W/mK when using the active carbon type 4 according to Example 2 of the invention (particle size distribution: 1.5). An improvement of 0.007 W/mK achieved by using active carbon having a particle size distribution according to the present invention.

From Table 2 it also appears that when active carbon having a particle size D10 of 2 micrometer was added in an amount of 5.0 wt.%, the lambda values for Comparative Example 9 (particle size distribution 6.3) were 0.0330 W/mK with 15 g/l and 0.0305 W/mK with 20 g/l, whilst these values were 0.0318 and 0.0308, respectively, when using the active carbon according to Example 3 (particle size distribution 1.5). An improvement of 0.012 W/mK with a density of 15 g/l and a value within the significance range, and thus remaining substantially constant, with 20 g/l.

From Table 2 it appears that particulate, expandable polystyrene polylactic acid and a combination exhibiting an increased thermal insulation value is obtained if active carbon having the present particle size distribution, i.e. smaller than or equal to 2.0, preferably smaller than or equal to 1.5, in particular smaller than or equal to 1.2, is used. Very good results are obtained if also the particle size (D10, 10th percentile) is further reduced, in particular to a value of 5 or 3 or even 2 micrometer. From the above table it furthermore follows that the amount of active carbon is preferably 1-15 wt.%, in particular 2-10 wt.%, more in particular 3-8 wt.%, based on polymer.

Further embodiments are defined in the appended claims.

**Claims**

1.  Particulate, expandable polymer which can be processed to form a foam having a fine cell structure and a low density, said polymer being polystyrene, polylactic acid, or a combination of polystyrene and polylactic acid, said polymer containing active carbon having a particle size D10 (10th percentile) of at most 3 micrometer for increasing the thermal insulation value, **characterised in that** the particle size distribution of the active carbon is accordirig to the following formula:

$$particlesizedistribution = \frac{(D90 - D10)}{D50} \leq 2,0$$

wherein D10, D50 and D90 are the 10th, 50th and 90th percentile, respectively, indicating in a curve of the cumulative particle size the particle sizes when the accumulated amounts of the particles are 10%, 50%, and 90%, respectively., wherein D90<= 10 micrometer.

2. Particulate, expandable polymer according to claim 1, **characterised in that** said active carbon has a particle size D10 (10th percentile) of at most 2 micrometer for increasing the thermal insulation value, wherein D90<= 8 micrometer

3. Particulate, expandable polymer according to claim 1, **characterised in that** the particle size distribution of the active carbon is smaller than or equal to 1.8, preferably smaller than or equal to 1.6, in particular smaller than or equal to 1.5, more in particular smaller than or equal to 1.2.

4. Particulate, expandable polymer according to one or more of the preceding claims, **characterised in that** the amount of active carbon is 1-15 wt.%, preferably 2-10 wt.%, in particular 3-8 wt.%, based on the polymer.

5. Particulate, expandable polymer according to one or more of the preceding claims, **characterised in that** additionally one or more other thermal insulation value-increasing agents selected from the group of graphite, aluminium powder, $Al(OH)_3$, $Mg(OH)_2$ and $Al_2O_3$, iron, zinc, copper and alloys thereof are present in the polymer.

6. Method for producing particulate expandable polymer according to one or more of claims 1-5, **characterised in that** said polymer being polystyrene, polylactic acid, or a combination of polystyrene and polylactic acid is fed to an extruder, mixed with at least a blowing agent and active carbon having a particle size D10 (10th percentile) of at most 3 micrometer and subsequently extruded, cooled and further reduced to particles, wherein the particle size distribution of the active carbon is according to the following formula:

$$particlesizedistribution = \frac{(D90 - D10)}{D50} \leq 2,0$$

wherein D10, D50 and D90 are the 10th, 50th and 90th percentile, respectively, indicating in a curve of the cumulative particle size the particle sizes when the accumulated amounts of the particles are 10%, 50%, and 90%, respectively, wherein D90<= 10 micrometer.

7. Method for producing particulate expandable polymer according to claim 6, **characterised in that** said active carbon has a particle size D10 (10th percentile) of at most 2 micrometer, wherein D90<= 8 micrometer.

8. Method for producing particulate expandable polymer according to one or more of claims 1-5, **characterised in that** said polymer being polystyrene, polylactic acid, or a combination of polystyrene and polylactic acid is fed to an extruder and mixed with active carbon having a particle size D10 (10th percentile) of at most 3 micrometer, and is then extruded, cooled and further reduced to particles and subsequently subjected to an impregnation treatment with' blowing agent so as to obtain a material which is cooled and which contains blowing agent, wherein the particle size distribution of the active carbon is according to the following formula:

$$particlesizedistribution = \frac{(D90 - D10)}{D50} \leq 2,0$$

wherein D10, D50 and D90 are the 10th, 50th and 90th percentile, respectively, indicating in a curve of the cumulative particle size the particle sizes when the accumulated amounts of the particles are 10%, 50%, and 90%, respectively, wherein D90<= 10 micrometer.

9. Method for producing particulate expandable polymer according to one or more or claims 1-5, **characterised in that** said polymer being polystyrene, polylactic acid, or a combination of polystyrene and polylactic acid is fed to an extruder and mixed with active carbon having a particle size D10 ($10^{th}$ percentile) of at most 2 micrometer, and is then extruded, cooled and further reduced to particles and subsequently subjected to an impregnation treatment with blowing agent so as to obtain a material which is cooled and which contains blowing agent, wherein the particle size distribution of the active carbon is according to the following formula:

$$particlesizedistribution = \frac{(D90 - D10)}{D50} \leq 2,0$$

wherein D10, D50 and D90 are the $10^{th}$, $50^{th}$ and $90^{th}$ percentile, respectively, indicating in a curve of the cumulative particle size the particle sizes when the accumulated amounts of the particles are 10%, 50%, and 90%, respectively, wherein D90<= 8 micrometer.

**10.** Foam material based on particulate expandable polymer according to one or more or claims 1-5.

**11.** Foam material according to claim 10, **characterised in that** after expansion the foam material has a density in the 9-100 kg/m$^3$ range.

**12.** Foam material according to claim 10, **characterised in that** after expansion the foam material has a density in the 15-30 kg/m$^3$ range.

**13.** Use of the foam material according to one or more or claims 10-12 for thermal insulation purposes.

**Patentansprüche**

**1.** Partikelförmiges, expandierbares Polymer, das verarbeitet werden kann, um einen Schaumstoff mit einer feinzelligen Struktur und einer geringen Dichte zu bilden, wobei das Polymer Polystyrol, Polymilchsäure oder eine Kombination von Polystyrol und Polymilchsäure ist, das Polymer Aktivkohle mit einer Partikelgröße D10 (10. Perzentil) von höchstens 3 Mikrometern zur Erhöhung des Wärmedämmwertes enthält, **dadurch gekennzeichnet, dass** die Partikelgrößenverteilung der Aktivkohle der folgenden Formel entspricht:

$$Partikelgrößenverteilung = \frac{(D90 - D10)}{D50} \leq 2,0$$

worin D10, D50 und D90 das 10., 50. bzw. 90. Perzentil sind und in einer Kurve der kumulativen Partikelgröße die Partikelgrößen anzeigen, wenn die akkumulierten Mengen der Partikel 10 %, 50 % bzw. 90 % betragen, wobei D90 $\leq$ 10 Mikrometer ist.

**2.** Partikelförmiges, expandierbares Polymer gemäß Anspruch 1, **dadurch gekennzeichnet, dass** die Aktivkohle eine Partikelgröße D10 (10. Perzentil) von höchstens 2 Mikrometern zur Erhöhung des Wärmedämmwertes aufweist, wobei D90 $\leq$ 8 Mikrometer ist.

**3.** Partikelförmiges, expandierbares Polymer gemäß Anspruch 1, **dadurch gekennzeichnet, dass** die Partikelgrößenverteilung der Aktivkohle kleiner als oder gleich 1,8, vorzugsweise kleiner als oder gleich 1,6, insbesondere kleiner als oder gleich 1,5, ganz besonders kleiner als oder gleich 1,2 ist.

**4.** Partikelförmiges, expandierbares Polymer gemäß einem oder mehreren der vorangegangenen Ansprüche, **dadurch gekennzeichnet, dass** die Menge der Aktivkohle 1-15 Gew.-%, vorzugweise 2-10 Gew.-%, insbesondere 3-8 Gew.-%, bezogen auf das Polymer, beträgt.

**5.** Partikelförmiges, expandierbares Polymer gemäß einem oder mehreren der vorangegangenen Ansprüche, **dadurch gekennzeichnet, dass** zusätzlich eine oder mehrere andere, den Wärmedämmwert erhöhende Substanzen, ausgewählt aus der Gruppe von Graphit, Aluminiumpulver, Al(OH)$_3$, Mg(OH)$_2$ und Al$_2$O$_3$, Eisen, Zink, Kupfer und Legierungen davon, in dem Polymer vorliegen.

6. Verfahren zur Herstellung eines partikelförmigen, expandierbaren Polymers gemäß einem oder mehreren der Ansprüche 1-5, **dadurch gekennzeichnet, dass** das Polymer, welches Polystyrol, Polymilchsäure oder eine Kombination von Polystyrol und Polymilchsäure ist, einem Extruder zugeführt, mit mindestens einem Treibmittel und Aktivkohle mit einer Partikelgröße D10 (10. Perzentil) von höchstens 3 Mikrometern gemischt und anschließend extrudiert, abgekühlt und weiter zu Partikeln zerkleinert wird, wobei die Partikelgrößenverteilung der Aktivkohle der folgenden Formel entspricht:

$$\text{Partikelgrößenverteilung} = \frac{(D90 - D10)}{D50} \leq 2,0$$

worin D10, D50 und D90 das 10., 50. bzw. 90. Perzentil sind und in einer Kurve der kumulativen Partikelgröße die Partikelgrößen anzeigen, wenn die akkumulierten Mengen der Partikel 10 %, 50 % bzw. 90 % betragen, wobei D90 $\leq$ 10 Mikrometer ist.

7. Verfahren zur Herstellung eines partikelförmigen, expandierbaren Polymers gemäß Anspruch 6, **dadurch gekennzeichnet, dass** die Aktivkohle eine Partikelgröße D10 (10. Perzentil) von höchstens 2 Mikrometern aufweist, wobei D90 $\leq$ 8 Mikrometer ist.

8. Verfahren zur Herstellung eines partikelförmigen, expandierbaren Polymers gemäß einem oder mehreren der Ansprüche 1-5, **dadurch gekennzeichnet, dass** das Polymer, welches Polystyrol, Polymilchsäure oder eine Kombination von Polystyrol und Polymilchsäure ist, einem Extruder zugeführt und mit Aktivkohle einer Partikelgröße D10 (10. Perzentil) von höchstens 3 Mikrometern gemischt und anschließend extrudiert, abgekühlt und weiter zu Partikeln zerkleinert sowie nachfolgend einer Imprägnierungsbehandlung mit Treibmittel unterzogen wird, um ein Material zu erhalten, das abgekühlt wird und Treibmittel enthält, wobei die Partikelgrößenverteilung der Aktivkohle der folgenden Formel entspricht:

$$\text{Partikelgrößenverteilung} = \frac{(D90 - D10)}{D50} \leq 2,0$$

worin D10, D50 und D90 das 10., 50. bzw. 90. Perzentil sind und in einer Kurve der kumulativen Partikelgröße die Partikelgrößen anzeigen, wenn die akkumulierten Mengen der Partikel 10 %, 50 % bzw. 90 % betragen, wobei D90 $\leq$ 10 Mikrometer ist.

9. Verfahren zur Herstellung eines partikelförmigen, expandierbaren Polymers gemäß einem oder mehreren der Ansprüche 1-5, **dadurch gekennzeichnet, dass** das Polymer, welches Polystyrol, Polymilchsäure oder eine Kombination von Polystyrol und Polymilchsäure ist, einem Extruder zugeführt und mit Aktivkohle einer Partikelgröße D10 (10. Perzentil) von höchstens 2 Mikrometern gemischt und anschließend extrudiert, abgekühlt und weiter zu Partikeln zerkleinert sowie nachfolgend einer Imprägnierungsbehandlung mit Treibmittel unterzogen wird, um ein Material zu erhalten, das abgekühlt wird und Treibmittel enthält, wobei die Partikelgrößenverteilung der Aktivkohle der folgenden Formel entspricht:

$$\text{Partikelgrößenverteilung} = \frac{(D90 - D10)}{D50} \leq 2,0$$

worin D10, D50 und D90 das 10., 50. bzw. 90. Perzentil sind und in einer Kurve der kumulativen Partikelgröße die Partikelgrößen anzeigen, wenn die akkumulierten Mengen der Partikel 10 %, 50 % bzw. 90 % betragen, wobei D90 $\leq$ 8 Mikrometer ist.

10. Schaumstoffmaterial auf der Grundlage eines partikelförmigen, expandierbaren Polymers gemäß einem oder mehreren der Ansprüche 1-5.

11. Schaumstoffmaterial gemäß Anspruch 10, **dadurch gekennzeichnet, dass** das Schaumstoffmaterial nach Expansion eine Dichte im Bereich von 9-100 kg/m$^3$ aufweist.

12. Schaumstoffmaterial gemäß Anspruch 10, **dadurch gekennzeichnet, dass** das Schaumstoffmaterial nach Expansion eine Dichte im Bereich von 15-30 kg/m$^3$ aufweist.

13. Verwendung des Schaumstoffmaterials gemäß einem oder mehreren der Ansprüche 10-12 zu Wärmedämmzwecken.

## Revendications

1. Polymère particulaire expansible qui peut être traité pour former une mousse ayant une structure cellulaire fine et une faible densité, ledit polymère étant du polystyrène, de l'acide polylactique ou une combinaison de polystyrène et d'acide polylactique, ledit polymère contenant du charbon actif ayant une taille de particule D10 (10$^{ème}$ centile) d'au plus 3 micromètres pour augmenter la valeur d'isolation thermique, **caractérisé en ce que** la répartition de taille de particule du charbon actif obéit à la formule suivante :

$$\text{répartition de taille de particule} = \frac{(D90 - D10)}{D50} \leq 2{,}0$$

dans laquelle D10, D50 et D90 représentent les 10$^{ème}$, 50$^{ème}$ et 90$^{ème}$ centiles, respectivement, indiquant dans une courbe de la taille cumulative de particules, les tailles de particules lorsque les quantités cumulées des particules sont de 10%, 50% et 90%, respectivement, où D90 <= 10 micromètres.

2. Polymère particulaire expansible selon la revendication 1, **caractérisé en ce que** ledit charbon actif a une taille de particule D10 (10$^{ème}$ centile) d'au plus 2 micromètres pour augmenter la valeur d'isolation thermique, où D90 <= 8 micromètres.

3. Polymère particulaire expansible selon la revendication 1, **caractérisé en ce que** la répartition de taille de particule du charbon actif est inférieure ou égale à 1,8, de préférence inférieure ou égale à 1,6, en particulier inférieure ou égale à 1,5, plus particulièrement inférieure ou égale à 1,2.

4. Polymère particulaire expansible selon une ou plusieurs des revendications précédentes, **caractérisé en ce que** la quantité de charbon actif est comprise entre 1 et 15% en poids, de préférence entre 2 et 10% en poids, en particulier entre 3 et 8% en poids, par rapport au polymère.

5. Polymère particulaire expansible selon une ou plusieurs des revendications précédentes, **caractérisé en ce qu'**en outre un ou plusieurs autre(s) agents augmentant la valeur d'isolation thermique choisi(s) dans le groupe constitué par le graphite, la poudre d'aluminium, Al(OH)$_3$, Mg(OH)$_2$ et Al$_2$O$_3$, le fer, le zinc, le cuivre et leurs alliages, est/sont présent(s) dans le polymère.

6. Procédé pour produire un polymère particulaire expansible selon une ou plusieurs des revendications 1 à 5, **caractérisé en ce que** ledit polymère qui est du polystyrène, de l'acide polylactique ou une combinaison de polystyrène et d'acide polylactique est introduit dans une extrudeuse, mélangé avec au moins un agent gonflant et du charbon actif ayant une taille de particule D10 (10$^{ème}$ centile) d'au plus 3 micromètres et par la suite extrudé, refroidi et encore réduit en particules, où la répartition de taille de particule du charbon actif obéit à la formule suivante :

$$\text{répartition de taille de particule} = \frac{(D90 - D10)}{D50} \leq 2{,}0$$

dans laquelle D10, D50 et D90 sont les 10$^{ème}$, 50$^{ème}$ et 90$^{ème}$ centiles, respectivement, indiquant dans une courbe de la taille cumulative de particules, les tailles de particules lorsque les quantités cumulées des particules sont de 10%, 50% et 90%, respectivement, où D90 <= 10 micromètres.

7. Procédé pour produire un polymère particulaire expansible selon la revendication 6, **caractérisé en ce que** ledit charbon actif a une taille de particule D10 (10$^{ème}$ centile) d'au plus 2 micromètres, où D90 <= 8 micromètres.

8. Procédé pour produire un polymère particulaire expansible selon une ou plusieurs des revendications 1 à 5, **caractérisé en ce que** ledit polymère qui est du polystyrène, de l'acide polylactique ou une combinaison de polystyrène et d'acide polylactique est introduit dans une extrudeuse et mélangé avec du charbon actif ayant une taille de particule D10 (10ème centile) d'au plus 3 micromètres, et est ensuite extrudé, refroidi et encore réduit en particules et par la suite soumis à un traitement d'imprégnation avec un agent gonflant de manière à obtenir un matériau qui est refroidi et qui contient un agent gonflant, où la répartition de taille de particule du charbon actif obéit à la formule suivante :

$$\text{répartition de taille de particule} = \frac{(D90 - D10)}{D50} \leq 2,0$$

dans laquelle D10, D50 et D90 sont les 10ème, 50ème et 90ème centiles, respectivement, indiquant dans une courbe de la taille cumulative de particules, les tailles de particules lorsque les quantités cumulées des particules sont de 10%, 50% et 90%, respectivement, où D90 <= 10 micromètres.

9. Procédé pour produire un polymère particulaire expansible selon une ou plusieurs des revendications 1 à 5, **caractérisé en ce que** ledit polymère qui est du polystyrène, de l'acide polylactique ou une combinaison de polystyrène et d'acide polylactique est introduit dans une extrudeuse et mélangé avec du charbon actif ayant une taille de particule D10 (10ème centile) d'au plus 2 micromètres, et est ensuite extrudé, refroidi et encore réduit en particules et par la suite soumis à un traitement d'imprégnation avec un agent gonflant de manière à obtenir un matériau qui est refroidi et qui contient un agent gonflant, où la répartition de taille de particule du charbon actif obéit à la formule suivante :

$$\text{répartition de taille de particule} = \frac{(D90 - D10)}{D50} \leq 2,0$$

dans laquelle D10, D50 et D90 sont les 10ème, 50ème et 90ème centiles, respectivement, indiquant dans une courbe de la taille cumulative de particules, les tailles de particules lorsque les quantités cumulées des particules sont de 10%, 50% et 90%, respectivement, D90 <= 8 micromètres.

10. Matériau en mousse à base de polymère particulaire expansible selon une ou plusieurs des revendications 1 à 5.

11. Matériau en mousse selon la revendication 10, **caractérisé en ce qu'**après expansion, le matériau en mousse a une densité se trouvant dans la plage allant de 9 à 100 kg/m³.

12. Matériau en mousse selon la revendication 10, **caractérisé en ce qu'**après expansion, le matériau en mousse a une densité se trouvant dans la plage allant de 15 à 30 kg/m³.

13. Utilisation du matériau en mousse selon une ou plusieurs des revendications 10 à 12 pour des fins d'isolation thermique.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- NL 1023638
- EP 1486530 A
- WO 0043442 A
- NL 2008000109 W
- WO 1994029383 A
- WO 9611962 A